# EUROPÄISCHE PATENTSCHRIFT

(11) **EP 0 477 900 B1**
(45) Veröffentlichungstag und Bekanntmachung des Hinweises auf die Patenterteilung: **26.04.1995**
(21) Anmeldenummer: 91116333.5
(22) Anmeldetag: 25.09.1991
(51) Int. Cl.: C08L 57/00, C08L 31/04, C09D 5/34, C09D 131/04, C04B 24/26

(54) **Dispersionspulverzusammensetzung**
Dispersion powder composition
Composition d'une poudre fluente

(30) Priorität: 27.09.1990 DE 4030638
(43) Veröffentlichungstag der Anmeldung: 01.04.1992
(73) Patentinhaber: WACKER-CHEMIE GMBH, D-81737 München (DE)
(72) Erfinder: Schulze, Joachim, Dr., W-8263 Burghausen (DE); Herold, Hardy, Dr., W-8263 Burghausen (DE); Hinterwinkler, Jürgen, W-8263 Burghausen (DE)

(56) Entgegenhaltungen:
- DE-A- 3 622 820
- DE-A- 3 839 865
- DATABASE WPIL Section Ch, Week 8440, 23. August 1984 Derwent Publications Ltd., London, GB; Class A93, AN 84-246030 & JP-A-59146960
- DATABASE WPIL Section Ch, Week 8421, 12. April 1984 Derwent Publications Ltd., London, GB; Class A93, AN 84-130121 & JP-A-59064557
- London, GB; Class A93, AN 84-130121

## Beschreibung

Die Erfindung betrifft eine redispergierbare Dispersionspulverzusammensetzung, welche vollverseifte Copolymere aus 1-Alkylvinylester und Vinylester enthält und deren Verwendung in Baustoffen, insbesonders in verlaufenden Bodenspachtelmassen.

Dispersionspulver werden seit vielen Jahren gerade im Bausektor als Kunststoffvergütung von hydraulisch abbindenden Systemen eingesetzt. Eine Übersicht über die Wirkung von Dispersionspulvern wird in der Zeitschrift TIZ (vormals: Tonindustrie-Zeitung) 9, S. 698 (1985) gegeben. Vor allem die Eigenschaften Haftung, Abriebbeständigkeit, Kratzfestigkeit und Biegezugfestigkeit von hydraulisch abbindenden Massen werden durch den Zusatz von Dispersionspulvern verbessert. Solche Dispersionspulver sind beispielsweise in der EP-A 228657 oder der DE-A 2049114 beschrieben und werden durch Sprühtrocknung wäßriger Polymerdispersionen unter Zusatz von Polyvinylalkohol und weiterer Additive hergestellt. Das so erhältliche gut rieselfähige Pulver mit Teilchengrößen zwischen 10 und 250 »m redispergiert in Wasser wieder zur Dispersion mit Teilchengrößen zwischen 0.1 und 5 »m. Diese Redispersion sollte dabei über einen längeren Zeitraum stabil bleiben, das heißt sie sollte nicht zum Absitzen neigen.

Ein wichtiges Einsatzgebiet für Dispersionspulver stellen hydraulisch abbindende, verlaufende Bodenspachtelmassen dar. Solche Bodenspachtelmassen sind aus der DE-A 3028559 und der EP-A 116524 bekannt und bestehen im allgemeinen aus Zement oder Mischungen verschiedener Zemente, sorgfältig abgestimmten Füllstoffkombinationen, Dispersionspulver, Verflüssiger und gegebenenfalls weiteren Zusätzen. Diese Massen werden als Trockenmörtel an die Baustelle geliefert, dort einfach mit Wasser angerührt und auf dem Boden ausgebracht. Die Materialien verlaufen zu einer glatten Oberfläche, die entweder direkt als Nutzschicht oder als Untergrund für weitere Beschichtungen dient. Bei dieser Anwendung kommt es immer wieder zu Problemen. Gerade wenn man dickere Schichten aufträgt bilden sich an der Oberfläche Unebenheiten, wie Krater oder Pin-Holes. Die Oberfläche wird nicht so glatt wie vom Abnehmer gewünscht und muß nachbearbeitet werden.

Es bestand daher die Aufgabe, die eben beschriebenen Nachteile bisher bekannter Bodenspachtelmassen, bezüglich der Oberflächenbeschaffenheit damit gefertigter Beschichtungen, zu überwinden ohne die Vorteile, die der Zusatz von Dispersionspulvern erbringt, wie verbesserte Abriebbeständigkeit, Kratzfestigkeit und Haftung, zu verlieren.

Überraschenderweise konnte die Aufgabe durch den Zusatz eines vollverseiften Copolymeren aus 1-Alkylvinylester und Vinylester zur Dispersionspulverzusammensetzung gelöst werden.

Solche Alkylvinylalkoholeinheiten enthaltende Polyvinylalkohole sind bislang nur als extrudierbare Thermoplasten (JP-A 52/57256, CA 88:75032n; JP-A 52/60842, CA87:118700c), im Gemisch mit Glycerin als Schmelzkleberzusammensetzung zur Verklebung von Pappen (JP-A 54/76634; CA 91:176392x), als Cobinder für Papierstreichmassen (DE-A 3622820), als rheologische Additive für wäßrige Dispersionen (DE-A 3724331) und als Schlichtemittel für Garne (DE-A 3724332) bekannt.

Gegenstand der Erfindung ist eine Dispersionspulverzusammensetzung aus
a) einem Basispolymerisat aus der Gruppe der Vinylester-Polymerisate, Styrol-Polymerisate, Acrylat-Polymerisate und Vinylchlorid-Polymerisate,
b) 2 bis 15 Gew%, bezogen auf das Basispolymerisat, Polyvinylalkohol mit einem Hydrolysegrad von 85 bis 94 Mol% und einer Höppler-Viskosität, in 4%-iger wäßriger Lösung, von 2 bis 25 mPa·s,
c) 3 bis 30 Gew%, bezogen auf das Gesamtgewicht polymerer Bestandteile, feinem Antiblockmittel,
d) 0.1 bis 2 Gew%, bezogen auf das Basispolymerisat, Entschäumer,
dadurch gekennzeichnet, daß
e) 1 bis 8 Gew%, bezogen auf das Basispolymerisat, eines vollverseiften 1-Alkylvinylester/Vinylester-Copolymeren mit einer Höppler-Viskosität, in 4%-iger wäßriger Lösung, von 1 bis 5 mPa·s enthalten sind.

Als Basispolymerisat geeignete Vinylester-Polymerisate sind Vinylacetat-Homopolymere; Copolymere des Vinylacetats mit Ethylen, Vinylchlorid und/oder weiteren Vinylestern, wie Vinyllaurat oder den Versaticsäurevinylestern VeoVa 9 bzw. VeoVa 10 (Vinylester von gesättigten α-verzweigten Monocarbonsäuren mit 9 bzw. 10 C-Atomen der Fa. Shell); Homopolymerisate von Vinylestern von gesättigten C₃-C₈-Alkylcarbonsäuren oder deren Copolymerisate mit Ethylen, Vinylchlorid und/oder weiteren Vinylestern. Beispiele für Styrol-Polymerisate sind Copolymere des Styrols mit Acrylsäureestern, wie Styrol-Butylacrylat-Polymerisate. Als Vinylchlorid-Polymerisate sind Vinylchlorid-Ethylen-Copolymere geeignet.

Vorzugsweise eingesetzt werden Vinylacetat-Homopolymere, Vinylacetat-Ethylen-Copolymere mit einem Ethylen-Gehalt von 1 bis 30 Gew%, Copolymere des Vinylacetats oder Vinyllaurats mit 1 bis 25 Gew% Ethylen und 50 bis 75 Gew% Vinylchlorid.

Als Komponente b) werden vorzugsweise Polyvinylalkohole mit einem Hydrolysegrad von 85 bis 94 Mol% und einer Höppler-Viskosität, bestimmt in 4%-iger wäßriger Lösung, von 2 bis 13 mPa·s eingesetzt.

Der Anteil an Antiblockmittel c) beträgt vorzugsweise 4 bis 20 Gew%. Besonders bevorzugt sind Antiblockmittel mit mittleren Teilchengrößen von 0.1 bis 50 »m. Beispiele für Antiblockmittel sind fein gemahlene Aluminiumsilikate, Kieselgur, kolloidales Silicagel, pyrogen erzeugtes Siliciumdioxid, Micro-Silica, Leichtspat, Kaolin, Talkum, Zemente, Diatomeenerde, Calciumcarbonat oder Magnesiumhydrosilikat.

Geeignete Entschäumer sind die am Markt erhältlichen Produkte, die sich für den Einsatz in hydraulisch abbindenden Systemen bewährt haben. Beispiele sind Silicon-Entschäumer, Entschäumer auf der Basis von flüssigen Kohlenwasserstoffen, Fettsäureestern oder Polyalkylenglykolen. Vorzugsweise beträgt der Gehalt an Entschäumer 0.2 bis 1.5 Gew%, bezogen auf das Basispolymerisat.

Das vollverseifte 1-Alkylvinylester/Vinylester-Copolymere enthält vorzugsweise 65 bis 95 Gew% Vinylalkoholeinheiten und 5 bis 35 Gew% 1-Alkylvinylalkohol-Einheiten mit C₁- bis C₄-Alkylgruppen. Besonders bevorzugt sind 1-Methylvinylalkoholeinheiten. Zugänglich werden diese Copolymeren durch Copolymerisation von Vinylacetat mit Isopropenylacetat und anschließender Verseifung. Die Herstellung ist in der DE-A 3724332 beschrieben. Vorzugsweise enthält die Dispersionspulverzusammensetzung 1 bis 5 Gew% des polyhydroxylgruppenhaltigen Copolymeren, wobei die Höppler-Viskosität, gemessen in 4%-iger wäßriger Lösung, besonders bevorzugt 1.5 bis 4.0 mPa·s beträgt.

Die Dispersionspulverzusammensetzung kann gegebenenfalls noch weitere Zusatzstoffe enthalten. So können noch 0 bis 30 Gew%, bezogen auf das Basispolymerisat, Zementverflüssiger zugesetzt werden. Vorzugsweise werden hierzu sulfonatgruppenhaltige Kondensationsprodukte aus Melamin oder Keton und Formaldehyd und/oder Naphthalinsulfonsäure-Formaldehyd-Kondensationsprodukte eingesetzt. Ein Beispiel für solche Zementverflüssiger ist etwa Melment F10 der SKW Trostberg.

Gegebenenfalls können auch noch oberflächenaktive Substanzen, wie Emulgatoren oder Netzmittel, vorzugsweise in einer Menge von 0 bis 1.0 Gew%, bezogen auf das Basispolymerisat, zugesetzt werden. Beispiele hierfür sind anionische Tenside, sowie nichtionische Tenside, beispielsweise Alkylpolyglykole bzw. Ethylenoxid-Propylenoxid-Copolymere.

Zur Herstellung der Dispersionspulverzusammensetzung wird das Basispolymerisat als wäßrige Dispersion eingesetzt. Dieser Dispersion wird die Polyvinylalkohol-Komponente b) zugesetzt. Vorzugsweise wird der Polyvinylalkohol dabei als wäßrige Lösung eingesetzt, wobei sich über die verwendete Wassermenge die Viskosität der Dispersion steuern läßt. Das vollverseifte 1-Alkylvinylester/Vinylester-Copolymere wird vorzugsweise in wäßriger Lösung der Dispersion des Basispolymerisats und der Polyvinylalkohol-Komponente b) zugesetzt. Diese Mischvorgänge können dabei in beliebiger Reihenfolge ablaufen. Das Einbringen des Entschäumers ist unkritisch; dieser kann mit den ebengenannten Komponenten vor der Trocknung vermischt werden oder auch als pulverförmiges Produkt in die trockene Dispersionspulverzusammensetzung eingemischt werden. Die gegebenenfalls einzusetzenden oberflächenaktiven Substanzen sowie der Zementverflüssiger werden vorzugsweise vor der Trocknung dem in Dispersion vorliegenden Gemisch zugegeben.

Nach Vermischung der Komponenten wird die Dispersion getrocknet, vorzugsweise sprühgetrocknet oder gefriergetrocknet, besonders bevorzugt sprühgetrocknet. Hierbei kann auf die bekannten Vorrichtungen, wie zum Beispiel Versprühen durch Mehrstoffdüsen oder mit der Scheibe, in einem gegebenenfalls erhitzten Trockengasstrom, zurückgegriffen werden. Im allgemeinen werden Temperaturen über 250°C nicht angewandt. Die optimale Temperatur des Trockengases kann in wenigen Versuchen ermittelt werden; oft haben sich Temperaturen über 60°C besonders bewährt.

Zur Erhöhung der Lagerfähigkeit und um zum Beispiel bei Pulvern mit niederer Glasübergangstemperatur T_{g} ein Verbacken und Verblocken zu verhindern, wird das erhaltene Pulver mit dem Antiblockmittel c) versetzt. Dies erfolgt vorzugsweise solange das Pulver noch feinverteilt ist, zum Beispiel noch im Trockengas suspendiert ist. Insbesondere wird das Antiblockmittel räumlich getrennt aber gleichzeitig mit der Dispersion in die Trocknungsvorrichtung dosiert.

Die erfindungsgemäße Dispersionspulverzusammensetzung eignet sich vor allem für den Einsatz in verlaufenden, hydraulisch abbindenden Spachtelmassen. Die Zusammensetzung solcher hydraulisch abbindender Spachtelmassen ist an sich bekannt. Die Grundlage dieser Massen bilden das hydraulische Bindemittel und Füllstoffe vorzugsweise im Gewichtsverhältnis von 1 : 5 bis 1 : 1. Beispiele für hydraulische Bindemittel sind Portlandzement, Tonerdeschmelzzement oder Anhydrit bzw. Mischungen davon. Als Füllstoff wird vorzugsweise Quarzsand, insbesonders in einer Körnung von 0.1 bis 1.0 mm oder Calciumcarbonat bzw. Mischungen davon eingesetzt.

Gebräuchliche Zusatzstoffe in solchen Massen sind außerdem noch Zementverflüssiger.

Bezogen auf das Trockengewicht der hydraulisch abbindenden Spachtelmasse beträgt die zuzusetzende Menge der erfindungsgemäßen Dispersionspulverzusammensetzung vorzugsweise zwischen 0.5 und 10 Gew%.

Vor der Applikation wird die mit der Dispersionspulverzusammensetzung modifizierte Spachtelmasse vorzugsweise mit 10 bis 30 Gew% Wasser, bezogen auf das Trockengewicht der Spachtelmasse-Dispersionspulver-Mischung, angerührt. Die Wassermenge ist dabei abhängig von der Zusammensetzung der Spachtelmasse.

Die erfindungsgemäße Dispersionspulverzusammensetzung eignet sich besonders zum Einsatz in verlaufenden, hydraulisch abbindenden Spachtelmassen. Neben der Verbesserung der Abriebfestigkeit, der Kratzfestigkeit und der Haftung führt deren Einsatz zur Ausbildung von sehr glatten Oberflächen ohne Krater oder Pin-Holes. Weitere Einsatzgebiete für die erfindungsgemäße Dispersionspulverzusammensetzung sind die Verwendung in Bauklebern, Mörteln, als Gipszusatz, sowie in Putzen und Dispersionsfarben.

Die nachfolgenden Beispiele dienen zur weiteren Erläuterung der Erfindung:
In den Beispielen verwendete Substanzen:

### Dispersion LL 1:

Mit Polyvinylalkohol stabilisierte wäßrige Dispersion mit einem Festgehalt von 55 % auf der Basis eines Vinylacetat-Ethylen-Copolymers mit einem Vinylacetat-Gehalt von 90 Gew% und einem Ethylengehalt von 10 Gew% der Wacker-Chemie GmbH.

### Dispersion LL 2:

Mit Polyvinylalkohol stabilisierte wäßrige Dispersion mit einem Festgehalt von 50 % auf der Basis eines Ethylen-Vinylchlorid-Vinyllaurat-Terpolymerisats mit einem Ethylen-Gehalt von 17 Gew%, einem Vinylchlorid-Gehalt von 70 Gew% und einem Vinyllaurat-Gehalt von 13 Gew% der Wacker-Chemie GmbH.

### Polyviol M 05/140:

Polyvinylalkohol mit einer Höppler-Viskosität von 5.0 mPa·s, in 4 %-iger wäßriger Lösung, und einer Verseifungszahl von 140 (= Hydrolysegrad von 88 Mol%) der Wacker-Chemie GmbH.

### Polyviol M 13/140:

Polyvinylalkohol mit einer Höppler-Viskosität von 13.0 mPa·s, in 4 %-iger wäßriger Lösung, und einer Verseifungszahl von 140 (= Hydrolysegrad von 88 Mol%) der Wacker-Chemie GmbH.

### Polyviol G 04/140:

Polyvinylalkohol mit einer Höppler-Viskosität von 4.0 mPa·s, in 4 %-iger wäßriger Lösung, und einer Verseifungszahl von 140 (= Hydrolysegrad von 88 Mol%) der Wacker-Chemie GmbH.

### PME:

Vollverseiftes Copolymer aus Isopropenylacetat und Vinylacetat mit einer Höppler-Viskosität von 2.5 mPa·s, in 4%-iger wäßriger Lösung, und einem Isopropenylacetatanteil von 20 Mol% der Wacker-Chemie GmbH.

### Melment F 10:

Zementverflüssiger auf der Basis eines sulfonatgruppenhaltigen Melamin-Formaldehyd-Kondensationsprodukts der Fa. SKW Trostberg.

### Wacker S 670:

Entschäumer auf Siliconbasis der Wacker-Chemie GmbH.

### Agitan 305:

Entschäumer auf der Basis von flüssigen Kohlenwasserstoffen der Fa. Münzig Heilbronn.

### Genapol PF 20:

Nichtionischer Emulgator auf der Basis eines Ethylenoxid-Propylenoxid-Copolymeren der Hoechst AG.

### Beispiel 1:

4000 Gew.-Teile Dispersion LL 1, 1100 Gew.-Teile Polyviol M 05/140 als 20 %-ige Lösung in Wasser (10 Gew% bezogen auf LL1-Harz), 132 Gew.-Teile PME als 50 %-ige Lösung in Wasser (3 Gew% bezogen auf LL1-Harz), 13.2 Gew.-Teile Wacker S 670 (0.6 Gew% bezogen auf LL1-Harz) und 500 Gew.-Teile Wasser wurden gründlich gemischt. Die Mischung wurde durch eine Zweistoffdüse versprüht. Als Verdüsungskomponente diente auf 4 bar vorgepreßte Luft; die gebildeten Tropfen wurden mit auf 125°C erhitzter Luft im Gleichstrom getrocknet. Das erhaltene Pulver wurde mit 10 Gew%, bezogen auf das Gesamtgewicht an polymeren Bestandteilen, handelsüblichem Antiblockmittel (Gemisch aus Calcium-Magnesium-Carbonat und Magnesiumhydrosilikat) versetzt.

### Beispiel 2:

4000 Gew.-Teile Dispersion LL1, 880 Gew.-Teile Polyviol G 04/140 als 20 %-ige Lösung in Wasser (8 Gew% bezogen auf LL1-Harz), 220 Gew.-Teile PME als 50 %-ige Lösung in Wasser (5 Gew% bezogen auf LL1-Harz), 17.2 Gew.-Teile Wacker S 670 (0.8 Gew% bezogen auf LL1-Harz), 1100 Gew.-Teile Melment F10 als 40 %-ige wäßrige Lösung (20 Gew% bezogen auf LL1-Harz) und 100 Gew.-Teile Wasser wurden gründlich gemischt. Die Mischung wurde durch eine Zweistoffdüse versprüht. Als Verdüsungskomponente diente auf 4 bar vorgepreßte Luft; die gebildeten Tropfen wurden mit auf 125°C erhitzter Luft im Gleichstrom getrocknet.
Das erhaltene Pulver wurde mit 10 Gew%, bezogen auf das Gesamtgewicht an polymeren Bestandteilen, handelsüblichem Antiblockmittel (Gemisch aus Calcium-Magnesium-Carbonat und Magnesiumhydrosilikat) versetzt.

### Beispiel 3:

4000 Gew.-Teile Dispersion LL 2, 1800 Gew.-Teile Polyviol M 13/140 als 10 %-ige Lösung in Wasser (9 Gew% bezogen auf LL2-Harz), 80 Gew.-Teile PME als 50 %-ige Lösung in Wasser (2 Gew% bezogen auf LL2-Harz), 20 Gew.-Teile Agitan 305 (1 Gew% bezogen auf LL2-Harz), 4 Gew.-Teile Genapol PF20 (0.2 Gew% bezogen auf LL2-Harz) und 500 Gew.-Teile Wasser wurden gründlich gemischt. Die Mischung wurde durch eine Zweistoffdüse versprüht. Als Verdüsungskomponente diente auf 4 bar vorgepreßte Luft; die gebildeten Tropfen wurden mit auf 125°C erhitzter Luft im Gleichstrom getrocknet.
Das erhaltene Pulver wurde mit 10 Gew%, bezogen auf das Gesamtgewicht an polymeren Bestandteilen, handelsüblichem Antiblockmittel (Gemisch aus Calcium-Magnesium-Carbonat und Magnesiumhydrosilikat) versetzt.

### Vergleichsbeispiel A:

Die Herstellung des Dispersionspulvers erfolgte gemäß Beispiel 1, jedoch wurde kein PME zugesetzt.

### Vergleichsbeispiel B:

Die Herstellung des Dispersionspulvers erfolgte gemäß Beispiel 2, jedoch wurde kein PME zugesetzt.

### Anwendungstechnische Prüfung:

Die beispielsgemäßen Dispersionspulverzusammensetzungen wurden in Spachtelmassen der nachfolgenden Rezeptur getestet:
60.0 Gew.-Teile Portland-Zement 35F
15.0 Gew.-Teile EFA-Filler (Elektrofilterasche-Füllstoff der Fa. VNDK Dortmund)
153.0 Gew.-Teile Quarzsand H33 (Quarzwerke Frechen)
30.0 Gew.-Teile Millicarb (Calciumcarbonat-Füllstoff der Fa. Omya Köln)
39.0 Gew.-Teile Carborex 20 (Calciumcarbonat-Füllstoff der Fa. Omya Köln)
1.5 Gew.-Teile Melment F10 (Zementverflüssiger der Fa. Trostberg)
1.5 Gew.-Teile Tamol NN9401 (Zementverflüssiger der BASF)
Im Vergleichsversuch ohne Zusatz von Dispersionspulver wurden 300 Gew.-Teile der Spachtelmasse mit 51 Gew.-Teilen Wasser intensiv gemischt und anschließend auf einer Folie in 4 mm Schichtdicke vergossen.

Bei Zusatz der beispielsgemäßen Dispersionspulver wurden 290 Gew.-Teile der Spachtelmasse mit 10 Gew.-Teilen Dispersionspulver vermischt. Anschließend wurde die Masse mit 51 Gew.-Teilen Wasser intensiv gemischt und auf einer Folie in 4 mm Schichtdicke vergossen.

### Prüfung der Oberflächenbeschaffenheit:

Die Beurteilung der Oberfläche erfolgte visuell mit folgender Bewertungsskala:
1 Sehr glatt, ohne Krater und Pin-Holes
2 Sehr glatt, ohne Krater, wenige Pin-Holes
3 Glatt, wenige Krater, viele Pin-Holes
4 Glatt, einige Krater, viele Pin-Holes

### Prüfung der Härte und Kratzfestigkeit:

Die Härte und Kratzfestigkeit der Spachtelmasse wurde durch Kratzen mit dem Messer geprüft. Dies gibt zugleich eine Information über die Verschleißfestigkeit der Spachtelmasse.

### Bewertungsskala:

1 sehr hart, sehr fester Verbund, sehr kratzfest
2 hart, fester Verbund, kratzfest
3 mäßig hart, mäßiger Verbund, mäßig kratzfest
4 mäßig hart, schlechter Verbund, wenig kratzfest

Die Ergebnisse der anwendungstechnischen Prüfung sind in Tabelle 1 zusammengefaßt.

**Tabelle 1**

| Pulverzusammensetzung | Oberflächenbeschaffenheit | Härte / Kratzfestigkeit |
|---|---|---|
| Beispiel 1 | 1 | 1 |
| Beispiel 2* | 2 | 2 |
| Beispiel 3 | 1 | 2 |
| Vergl.beispiel A | 3 | 1 |
| Vergl.beispiel B* | 4 | 2 |
| ohne Pulver | 3 | 4 |

| | | |
|---|---|---|
| * = Melment F10 und Tamol NN9401 wurden in der Spachtelmassen-Rezeptur weggelassen, da bereits in der Pulver-Rezeptur Zementverflüssiger verwendet wird. | | |

## Patentansprüche (Patentansprüche für folgende(n) Vertragsstaat(en): AT, BE, CH, DE, FR, GB, IT, LI, NL, SE)

1. Dispersionspulverzusammensetzung aus
a) einem Basispolymerisat aus der Gruppe der Vinylester-Polymerisate, Styrol-Polymerisate, Acrylat-Polymerisate und Vinylchlorid-Polymerisate,
b) 2 bis 15 Gew%, bezogen auf das Basispolymerisat, Polyvinylalkohol mit einem Hydrolysegrad von 85 bis 94 Mol% und einer Höppler-Viskosität, in 4%-iger wäßriger Lösung, von 2 bis 25 mPa·s,
c) 3 bis 30 Gew%, bezogen auf das Gesamtgewicht polymerer Bestandteile, feinem Antiblockmittel,
d) 0.1 bis 2 Gew%, bezogen auf das Basispolymerisat, Entschäumer,
dadurch gekennzeichnet, daß
e) 1 bis 8 Gew%, bezogen auf das Basispolymerisat, eines vollverseiften 1-Alkylvinylester/Vinylester-Copolymeren mit einer Höppler-Viskosität, in 4%-iger wäßriger Lösung, von 1 bis 5 mPa·s enthalten sind.

2. Dispersionspulverzusammensetzung nach Anspruch 1, dadurch gekennzeichnet, daß das vollverseifte 1-Alkylvinylester/Vinylester-Copolymere 65 bis 95 Gew% Vinylalkoholeinheiten und 5 bis 35 Gew% 1-Alkylvinylalkohol-Einheiten mit C₁- bis C₄-Alkylgruppen enthält.

3. Dispersionspulverzusammensetzung nach Anspruch 1 oder 2, dadurch gekennzeichnet, daß ein vollverseiftes Isopropenylacetat/Vinylacetat-Copolymeres enthalten ist.

4. Dispersionspulverzusammensetzung nach Anspruch 1, 2 oder 3, dadurch gekennzeichnet, daß als Basispolymerisat a) ein Vinylacetat-Homopolymer, Vinylacetat-Ethylen-Copolymere mit einem Ethylen-Gehalt von 1 bis 30 Gew%, oder Copolymere des Vinylacetats oder Vinyllaurats mit 1 bis 25 Gew% Ethylen und 50 bis 75 Gew% Vinylchlorid enthalten sind.

5. Dispersionspulverzusammensetzung nach Anspruch 1, 2, 3 oder 4, dadurch gekennzeichnet, daß noch bis zu 30 Gew%, bezogen auf das Basispolymerisat, Zementverflüssiger zugesetzt werden.

6. Dispersionspulverzusammensetzung nach Anspruch 1, 2, 3, 4 oder 5, dadurch gekennzeichnet, daß noch bis zu 1.0 Gew%, bezogen auf das Basispolymerisat, Emulgatoren oder Netzmittel zugesetzt werden.

7. Verwendung einer Dispersionspulverzusammensetzung nach einem der obengenannten Ansprüche zum Einsatz in verlaufenden, hydraulisch abbindenden Spachtelmassen.

8. Verwendung nach Anspruch 7, dadurch gekennzeichnet, daß die Dispersionspulverzusammensetzung in einer Menge von 0.5 bis 10 Gew%, bezogen auf das Trockengewicht der hydraulisch abbindenden Spachtelmasse, zugegeben wird.

9. Verwendung einer Dispersionspulverzusammensetzung nach einem der Ansprüche 1 bis 6 in Bauklebern, Mörteln, als Gipszusatz, sowie in Putzen und Dispersionsfarben.

## Patentansprüche (Patentansprüche für folgende(n) Vertragsstaat(en): ES)

1. Verfahren zur Herstellung einer Dispersionspulverzusammensetzung, dadurch gekennzeichnet, daß eine wäßrige Dispersion eines Basispolymerisats aus der Gruppe der Vinylester-Polymerisate, Styrol-Polymerisate, Acrylat-Polymerisate und Vinylchlorid-Polymerisate, mit 2 bis 15 Gew%, bezogen auf das Basispolymerisat, Polyvinylalkohol mit einem Hydrolysegrad von 85 bis 94 Mol% und einer Höppler-Viskosität, in 4%-iger wäßriger Lösung, von 2 bis 25 mPa·s, und 1 bis 8 Gew%, bezogen auf das Basispolymerisat, eines vollverseiften 1-Alkylvinylester/Vinylester-Copolymeren mit einer Höppler-Viskosität, in 4%-iger wäßriger Lösung, von 1 bis 5 mPa·s vermischt wird und die Mischung getrocknet wird, wobei vor oder nach der Trocknung noch 3 bis 30 Gew%, bezogen auf das Gesamtgewicht polymerer Bestandteile, feines Antiblockmittel und 0.1 bis 2 Gew%, bezogen auf das Basispolymerisat, Entschäumer zugegeben werden.

2. Verfahren nach Anspruch 1, dadurch gekennzeichnet, daß das vollverseifte 1-Alkylvinylester/Vinylester-Copolymere 65 bis 95 Gew% Vinylalkoholeinheiten und 5 bis 35 Gew% 1-Alkylvinylalkohol-Einheiten mit C₁- bis C₄-Alkylgruppen enthält.

3. Verfahren nach Anspruch 1 oder 2, dadurch gekennzeichnet, daß ein vollverseiftes Isopropenylacetat/Vinylacetat-Copolymeres verwendet wird.

4. Verfahren nach Anspruch 1, 2 oder 3, dadurch gekennzeichnet, daß als Basispolymerisat ein Vinylacetat-Homopolymer, Vinylacetat-Ethylen-Copolymere mit einem Ethylen-Gehalt von 1 bis 30 Gew%, oder Copolymere des Vinylacetats oder Vinyllaurats mit 1 bis 25 Gew% Ethylen und 50 bis 75 Gew% Vinylchlorid eingesetzt werden.

5. Verfahren nach Anspruch 1, 2, 3 oder 4, dadurch gekennzeichnet, daß noch bis zu 30 Gew%, bezogen auf das Basispolymerisat, Zementverflüssiger zugesetzt werden.

6. Verfahren nach Anspruch 1, 2, 3, 4 oder 5, dadurch gekennzeichnet, daß noch bis zu 1.0 Gew%, bezogen auf das Basispolymerisat, Emulgatoren oder Netzmittel zugesetzt werden.

7. Verwendung der, nach den Verfahren gemäß einem der obengenannten Ansprüche hergestellten, Dispersionspulverzusammensetzungen zum Einsatz in verlaufenden, hydraulisch abbindenden Spachtelmassen.

8. Verwendung nach Anspruch 7, dadurch gekennzeichnet, daß die Dispersionspulverzusammensetzung in einer Menge von 0.5 bis 10 Gew%, bezogen auf das Trockengewicht der hydraulisch abbindenden Spachtelmasse, zugegeben wird.

9. Verwendung der, nach den Verfahren gemäß einem der Ansprüche 1 bis 6 hergestellten, Dispersionspulverzusammensetzungen in Bauklebern, Mörteln, als Gipszusatz, sowie in Putzen und Dispersionsfarben.

## Claims (Claims for the following Contracting State(s): AT, BE, CH, DE, FR, GB, IT, LI, NL, SE)

1. Redispersible powder composition comprising
a) a base polymer from the group comprising vinyl ester polymers, styrene polymers, acrylate polymers and vinyl chloride polymers,
b) 2 to 15% by weight, relative to the base polymer, of polyvinyl alcohol having a degree of hydrolysis of 85 to 94 mol% and a Höppler viscosity, as a 4% aqueous solution, of 2 to 25 mPa·s,
c) 3 to 30% by weight, relative to the total weight of polymer components, of a fine antiblocking agent,
d) 0.1 to 2% by weight, relative to the base polymer, of antifoams, characterized in that it contains
e) 1 to 8% by weight, relative to the base polymer, of a fully hydrolysed 1-alkylvinyl ester/vinyl ester copolymer having a Höppler viscosity, as a 4% aqueous solution, of 1 to 5 mPa·s.

2. Redispersible powder composition according to Claim 1, characterized in that the fully hydrolysed 1-alkylvinyl ester/vinyl ester copolymer contains 65 to 95% by weight of vinyl alcohol units and 5 to 35% by weight of 1-alkylvinyl alcohol units having C₁- to C₄-alkyl groups.

3. Redispersible powder composition according to Claim 1 or 2, characterized in that it contains a fully hydrolysed isopropenyl acetate/vinyl acetate copolymer.

4. Redispersible powder composition according to Claim 1, 2 or 3, characterized in that the base polymer a) present is a vinyl acetate homopolymer, vinyl acetate/ethylene copolymer having an ethylene content of 1 to 30% by weight, or vinyl acetate or vinyl laurate copolymers having 1 to 25% by weight of ethylene and 50 to 75% by weight of vinyl chloride.

5. Redispersible powder composition according to Claim 1, 2, 3 or 4, characterized in that up to 30% by weight, relative to the base polymer, of cement-plasticizing agents are added.

6. Redispersible powder composition according to Claim 1, 2, 3, 4 or 5, characterized in that up to 1.0% by weight, relative to the base polymer, of emulsifiers or wetting agents is added.

7. Use of the redispersible powder composition according to any of the abovementioned claims for use in flowing, hydraulically setting levelling compounds.

8. Use according to Claim 7, characterized in that the redispersible powder composition is added in an amount of 0.5 to 10% by weight, relative to the dry weight of the hydraulically setting levelling compound.

9. Use of the redispersible powder composition according to any of Claims 1 to 6 in building adhesives, mortars, as an additive to gypsum, and in plasters and emulsion paints.

## Claims (Claims for the following Contracting State(s): ES)

1. Process for preparing a redispersible powder composition, characterized in that an aqueous dispersion of a base polymer from the group comprising vinyl ester polymers, styrene polymers, acrylate polymers and vinyl chloride polymers is mixed with 2 to 15% by weight, relative to the base polymer, of polyvinyl alcohol having a degree of hydrolysis of 85 to 94 mol% and a Höppler viscosity, as a 4% aqueous solution, of 2 to 25 mPa·s, and with 1 to 8% by weight, relative to the base polymer, of a fully hydrolysed 1-alkylvinyl ester/vinyl ester copolymer having a Höppler viscosity, as a 4% aqueous solution, of 1 to 5 mPa·s, and the mixture is dried, 3 to 30% by weight, relative to the total weight of polymer components, of a fine antiblocking agent and 0.1 to 2% by weight, relative to the base polymer, of antifoams also being added before or after the drying.

2. Process according to Claim 1, characterized in that the fully hydrolysed 1-alkylvinyl ester/vinyl ester copolymer contains 65 to 95% by weight of vinyl alcohol units and 5 to 35% by weight of 1-alkylvinyl alcohol units having C₁ to C₄-alkyl groups.

3. Process according to Claim 1 or 2, characterized in that a fully hydrolyzed isopropenyl acetate/vinyl acetate copolymer is used.

4. Process according to Claim 1, 2 or 3, characterized in that a vinyl acetate homopolymer, vinyl acetate/ethylene copolymer having an ethylene content of 1 to 30% by weight, or vinyl acetate or vinyl laurate copolymers having 1 to 25% by weight of ethylene and 50 to 75% by weight of vinyl chloride are used as the base polymer.

5. Process according to Claim 1, 2, 3 or 4, characterized in that up to 30% by weight, relative to the base polymer, of cement-plasticizing agents are added.

6. Process according to Claim 1, 2, 3, 4 or 5, characterized in that up to 1.0% by weight, relative to the base polymer, of emulsifiers or wetting agents is added.

7. Use of the redispersible powder composition prepared in accordance with the process according to any of the abovementioned claims for use in flowing, hydraulically setting levelling compounds.

8. Use according to Claim 7, characterized in that the redispersible powder composition is added in an amount of 0.5 to 10% by weight, relative to the dry weight of the hydraulically setting levelling compound.

9. Use of the redispersible powder composition prepared in accordance with the process according to one of Claims 1 to 6 in building adhesives, mortars, as an additive to gypsum, and in plasters and emulsion paints.

## Revendications (Revendications pour l'(les) Etat(s) contractant(s) suivant(s): AT, BE, CH, DE, FR, GB, IT, LI, NL, SE)

1. Composition de poudre pour dispersion (fluente) comprenant :
a) - un polymère de base de la famille des polymères d'esters vinyliques, polymères de styrène, polymères d'acrylate et polymères de chlorure de vinyle,
b) - de 2 à 15 % en poids, rapporté au polymère de base, d'alcools polyvinyliques ayant un taux d'hydrolyse de 85 à 94 mole % et une viscosité de Höppler, en solution aqueuse à 4 %, de 2 à 25 mPa.s,
c) - de 3 à 30 % en poids, rapporté au poids total de la fraction polymère, d'agents fins, antiagglomération,
d) - de 0,1 à 2 % en poids, rapporté au polymère de base, d'agents antimousse,
**caractérisée** en ce qu'elle contient
e) - de 1 à 8 % en poids, rapporté au polymère de base, d'un copolymère totalement saponifié ester 1-alkylvinylique / ester vinylique, ayant une viscosité de Höppler, en solution aqueuse à 4 %, de 1 à 5 mPa.s.

2. Composition de poudre pour dispersion selon la revendication 1, **caractérisée** en ce que le copolymère totalement saponifié ester 1-alkylvinylique / ester vinylique contient de 65 à 95 % en poids d'unités alcool vinylique et de 5 à 35 % en poids d'unités d'alcool 1-alkylvinylique ayant un groupe alkyle en C₁-C₄.

3. Composition de poudre pour dispersion selon la revendication 1 ou 2, **caractérisée** en ce qu'elle contient un copolymère totalement saponifié acétate d'isopropényle / acétate de vinyle.

4. Composition de poudre pour dispersion selon la revendication 1, 2 ou 3, **caractérisée** en ce que le polymère de base a) comprend soit un homopolymère d'acétate de vinyle, soit un copolymère acétate de vinyle-éthylène avec une teneur en éthylène de 1 à 30 % en poids, soit un copolymère d'acétate de vinyle ou de laurate de vinyle avec de 1 à 25 % en poids d'éthylène et de 50 à 75 % en poids de chlorure de vinyle.

5. Composition de poudre pour dispersion selon la revendication 1, 2, 3 ou 4, **caractérisée** en ce que on ajoute encore jusqu'à 30 % en poids, rapporté au polymère de base, d'agents fluidifiants de ciment.

6. Composition selon la revendication 1, 2, 3, 4 ou 5, **caractérisée** en ce que on ajoute encore jusqu'à 1,0 % en poids, rapporté au polymère de base, d'agents émulsifiants ou d'agents mouillants.

7. Utilisation d'une composition de poudre pour dispersion selon les revendications précédentes, en tant qu'additif pour masses pour mastics et enduits fluides à prise hydraulique.

8. Utilisation selon la revendication 7, **caractérisée** en ce que la composition de poudre à dispersion est introduite en quantité de 0,5 à 10 % en poids, rapportée au poids sec d'enduit à prise hydraulique.

9. Utilisation d'une poudre à dispersion selon l'une des revendications 1 à 6 dans les colles pour construction, les mortiers, comme additif de plâtre, ainsi que dans les enduits et les colorants en dispersion.

## Revendications (Revendications pour l'(les) Etat(s) contractant(s) suivant(s): ES)

1. Procédé de préparation d'une composition de poudre pour dispersion (fluente), **caractérisé** en ce que l'on mélange une dispersion aqueuse de polymères de base du groupe des polymères d'esters vinyliques, polymère de styrène, polymère d'acrylate et polymère de chlorure de vinyle, ayant de 2 à 15 % en poids, rapportée au polymère de base, d'alcool polyvinylique ayant un taux d'hydrolyse de 85 à 94 mole % et une viscosité de Höppler, en solution aqueuse à 4 %, de 2 à 25 mPa.s, et de 1 à 8 % en poids, rapportée au polymère de base, de copolymères totalement saponifiés ester 1-alkylvinylique / ester vinylique ayant une viscosité de Köppler, en solution aqueuse à 4 %, de 1 à 5 mPa.s et on sèche le mélange, on ajoute avant ou après le séchage encore de 3 à 30 % en poids, rapporté au poids total des constituants polymère, de fins agents d'antiagglomération et de 0,1 à 2 % en poids, rapporté au polymère de base, d'agents antimousse.

2. Procédé selon la revendication 1, **caractérisé** en ce que le copolymère totalement saponifié ester 1-alkylvinylique / ester vinylique contient de 65 à 95 % en poids d'unités alcool vinylique et de 5 à 35 % en poids d'unités d'alcool 1-alkylvinylique ayant un groupe alkyle en C₁-C₄.

3. Procédé selon la revendication 1 ou 2, **caractérisé** en ce qu'elle contient un copolymère totalement saponifié acétate d'isopropényle / acétate de vinyle.

4. Procédé selon la revendication 1, 2 ou 3, **caractérisé** en ce que le polymère de base un homopolymère acétate de vinyle, un copolymère acétate de vinyle / éthylène ayant une teneur en éthylène de 1 à 30 % en poids, ou un copolymère d'acétate de vinyle ou de laurate de vinyle avec de 1 à 25 % en poids d'éthylène et de 50 à 75 % en poids de chlorure de vinyle.

5. Procédé selon la revendication 1, 2, 3 ou 4, **caractérisé** en ce que on ajoute encore jusqu'à 30 % en poids, rapporté au polymère de base, d'agents fluidifiants de ciment.

6. Procédé selon la revendication 1, 2, 3, 4 ou 5, **caractérisé** en ce que on ajoute encore jusqu'à 1,0 % en poids, rapporté au polymère de base, d'agents émulsifiants ou d'agents mouillants.

7. Utilisation de composition de poudre à dispersion obtenue selon le procédé conforme à l'une des revendications ci-dessus, comme additif pour masses pour mastics et enduits fluides à prise hydraulique.

8. Utilisation selon la revendication 7, **caractérisée** en ce que la composition de poudre à dispersion est introduite sous une quantité de 0,5 à 10 % en poids, rapportée au poids sec d'enduit à prise hydraulique.

9. Utilisation d'une composition de poudre à dispersion, obtenue selon le procédé conforme à l'une des revendications 1 à 6 dans les colles pour construction, les mortiers, comme additif de plâtre, ainsi que dans les enduits et les colorants en dispersion.
